# EUROPÄISCHE PATENTSCHRIFT

(11) **EP 1 329 149 B1**
(45) Veröffentlichungstag und Bekanntmachung des Hinweises auf die Patenterteilung: **06.05.2009**
(21) Anmeldenummer: 03100062.3
(22) Anmeldetag: 15.01.2003
(51) Int. Cl.: A01C 7/04

(54) **Sämaschine**
Sowing maschine
Semoir

(30) Priorität: 17.01.2002 US 51904
(43) Veröffentlichungstag der Anmeldung: 23.07.2003
(73) Patentinhaber: DEERE & COMPANY, Moline, Illinois 61265-8098 (US)
(72) Erfinder: Keaton, Miles Raymond, IL 61201, Rock Island (US)
(74) Vertreter: Holst, Sönke

(56) Entgegenhaltungen:
- EP-A- 0 958 726
- US-A- 5 170 909
- US-B1- 6 308 646

## Beschreibung

Die Erfindung betrifft eine Sämaschine zum Aussäen von Saatgut auf einem Feld, mit einer Mehrzahl von Messsystemen, einer Luftpumpe zur Erzeugung von Luftdruck, die mit einem Verzweiger in pneumatischer Verbindung steht und einer pneumatischen Verbindung zwischen dem Verzweiger und wenigstens einem der Messsysteme.

Moderne Sämaschinen verwenden eine Vielzahl von Messsystemen, die entsprechend der Pflanzreihen voneinander beabstandet an einem pneumatischen Verzweiger angeordnet sind. Ein derartiges Messsystem ist beispielsweise in der US 5 170 909 A oder der US 6 308 646 A offenbart. Aufwändigere Messsysteme, welche die Rate steuern, mit dem das Saatgut ausgebracht wird, verwenden Luftdruck, um die Ausbringung des Saatguts in den Boden zu steuern. Bei manchen Systemen wird positiver Luftdruck (Überdruck) verwendet. Bei anderen Systemen wird negativer Luftdruck in der Form eines Unterdrucks verwendet, um das Saatgut abzumessen.

Positiver oder negativer Luftdruck wird durch eine Luftpumpe in Form eines Ventilators erzeugt. Der Luftdruck der Luftpumpe wird einem pneumatischen Verzweiger zugeführt. Der Verzweiger ist wiederum pneumatisch durch Schläuche mit den einzelnen Saatgut-Messsystemen verbunden.

Der Luftdruck, mit dem die Messsystem für die einzelnen Reihen beaufschlagt werden, ist nicht identisch. Derartige Bedingungen haben ungleiche Leistungen der Messsysteme zur Folge, die möglicherweise Unterschiede in den Besetzungen und Abständen des Saatguts von einer Reihe zur anderen Reihe zum Ergebnis haben können. Der positive oder negative Luftdruck ist bei den Messsystemen am größten, die die kürzeste pneumatische Verbindung mit der Quelle unter Über- oder Unterdruck stehender Luft haben.

Das der Erfindung zu Grunde liegende Problem wird darin gesehen, Sämaschinen dahingehend zu verbessern, dass eine gleichmäßigere Verteilung unter Druck stehender Luft zu den pneumatischen Messsystemen und damit über die Breite der Sämaschine eine gleichmäßigere Saatgutabgabe erzielt wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Erfindungsgemäß wird eine Sämaschine der Eingangs genannten Art mit einem Ventil versehen, das pneumatisch zwischen dem Verzweiger und einem luftdruckunterstützten Ausgabeelement innerhalb wenigstens eines der Messsysteme angeordnet ist, wobei eine Öffnung des Ventils insbesondere durch einen Aktor verstellbar ist, derart, dass das Ventil ein Gehäuse aufweist, an dem der Aktor befestigt ist, sowie mindestens eine vom Gehäuse gehaltene Blende umfasst, die zumindest teilweise eine verstellbare Öffnung definiert, wobei die Blende durch den Aktor bewegbar ist, um eine offene Durchflussfläche der Öffnung zu ändern.

Eine Sämaschine ist mit einem Rahmen ausgestattet, der eine Mehrzahl an pneumatischen Messsystemen aufweist. Eine am Rahmen angeordnete Luftpumpe stellt abhängig vom Typ des Messsystems einem pneumatischen Verzweiger einen Über- oder Unterdruck bereit. Der pneumatische Verzweiger ist wiederum pneumatisch mit den Messsystemen gekoppelt, in der Regel durch Luftschläuche. Ein Ventil, beispielsweise ein Ventil mit verstellbarer Öffnung, ist zwischen dem Verzweiger und dem pneumatisch unterstützten, das Saatgut zu messenden und in den Boden abgebenden Ausgabeelement zumindest eines Messsystems angeordnet.

Auf diese Weise erhält man ein System zur Steuerung des Drucks, das geeignet ist, den Unter- oder Überdruck präzise einzustellen, der dem pneumatischen Messsystem zugeführt wird.

Erfindungsgemäße Ventile können zwischen dem Verzweiger und allen Messsystemen der Sämaschine angeordnet sein. Bei anderen Ausführungsformen der Erfindung wird ein Ventil nur dort vorgesehen, wo es besonders nötig ist, nämlich zwischen dem Verteiler und dem ihm pneumatisch nächsten Messsystem (oder den ihm pneumatisch näheren Messsystemen).

Die Ventile können in Gehäusen angeordnet sein, die zur Aufnahme der Luftschläuche mit Stutzen versehen sind. Die Ventile können in den Luftschlauch zwischen Verteiler und Messsystem eingeschleift sein oder mit dem Messsystem verbunden oder darin integriert werden.

Ein erfindungsgemäßes Ventil umfasst ein im Wesentlichen geschlossenes Gehäuse mit einem ersten Luftanschluss und einem zweiten Luftanschluss und einem Flussweg dazwischen. Eine oder mehrere Blenden sind innerhalb des Gehäuses in dem Flussweg zwischen den Luftanschlüssen angeordnet. Ein Aktor ist mit dem Gehäuse verbunden und betreibbar, die Blende zu einem steuerbaren Grad in den Flussweg zwischen dem ersten und zweiten Luftanschluss zu positionieren.

In einer Ausführungsform werden drei (oder mehr) miteinander gekoppelte Blenden verwendet, um eine Irisblende zu bilden, die die Öffnung zwischen den Luftanschlüssen vergrößern und verkleinern kann. Bei einer anderen Ausführungsform kann eine einzige Blende genutzt werden, um die Öffnung im Flussweg zwischen den Luftanschlüssen auf eine exzentrische Weise zu schließen. Denkbar ist auch die Verwendung eines Schmetterlingsventils.

Das System kann zu Rückkopplungszwecken Drucksignale von Drucksensoren an dem mit einem Ventil ausgestatteten Messsystem erhalten, um den Über- oder Unterdruck am jeweiligen Messsystem mittels des Ventils auf einen gewünschten Wert einstellen zu können, so dass in den verschiedenen Reihen übereinstimmende Pflanzdichten erzielt werden. Alternativ oder zusätzlich könnte das System die ausgebrachten Saatgutmengen als Rückkopplungssignale zur Einstellung der Ventile erfassen.

In den Zeichnungen sind drei nachfolgend näher beschriebene Ausführungsbeispiele der Erfindung dargestellt. Es zeigt:
- Fig. 1: eine Draufsicht auf ein Reihenpflanzgerät, das eine Vielzahl einzelner Pflanzeinheiten aufweist,
- Fig. 2: eine halbschematische Seitenansicht einer Pflanzeinheit und des pneumatischen Verteilersystems,
- Fig. 3: eine perspektivische Ansicht eines erfindungsgemäßen Ventils mit verstellbarer Öffnung,
- Fig. 4: eine perspektivische Ansicht des Ventils mit verstellbarer Öffnung aus Figur 3, bei der die frontseitige Abdeckung zu Erläuterungszwecken entfernt wurde,
- Fig. 5: eine perspektivische Ansicht einer der in Figur 4 gezeigten Blenden,
- Fig. 6a-6c: Teilansichten des verstellbaren Ventils aus Figur 3 in fortschreitenden Stadien des Schließens,
- Fig. 7: eine perspektivische Ansicht eines Ventils mit einstellbarer Öffnung nach einer zweiten Ausführungsform der Erfindung, wobei eine Frontabdeckung zu Erläuterungszwecken entfernt wurde, aber trotzdem ein Aktor in seiner Position dargestellt ist,
- Fig. 8a-8c: Teildraufsichten des verstellbaren Ventils aus Figur 7 in fortschreitenden Stadien des Schließens, und
- Fig. 9: eine schematische, teilgeschnittene Ansicht einer alternativen Ausführungsform der Erfindung.

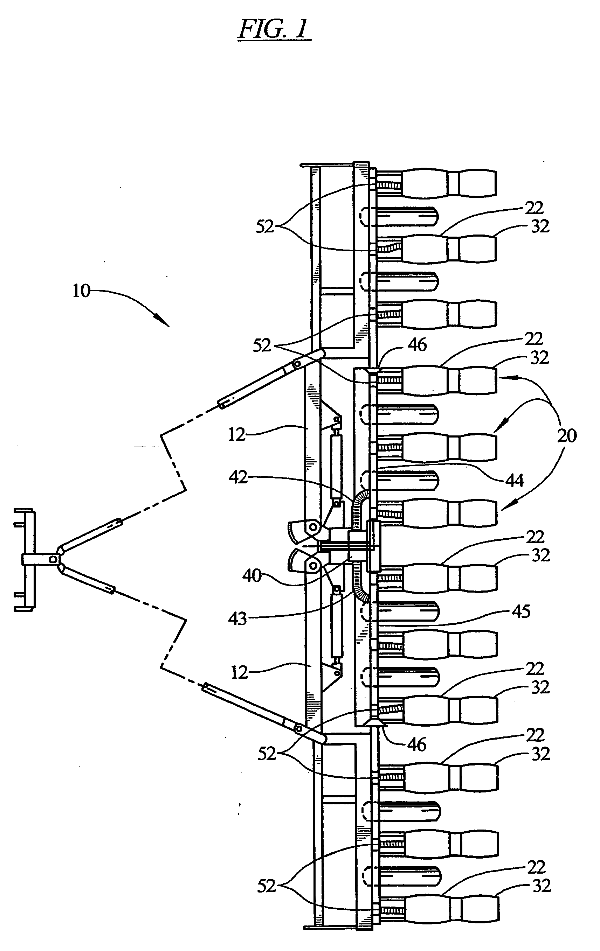

Figur 1 ist eine Draufsicht auf eine Sämaschine 10. In der gezeigten Ausführungsform ist die Sämaschine ein Reihenpflanzgerät (in Reihen arbeitende Einzelkornsämaschine), jedoch könnte die vorliegende Erfindung an jeder anderen Sämaschine verwendet werden, die pneumatische Messsysteme aufweist, einschließlich Drillmaschinen und pneumatischer Sämaschinen. Die Sämaschine 10 umfasst einen Rahmen 12, der in eine in Figur 1 gezeigte Arbeitsposition ausgezogen und in eine Transportkonfiguration eingeklappt werden kann. Eine Vielzahl an Reihenpflanzeinheiten 20 ist am Rahmen 12 angebracht.

Eine Luftpumpe 40 in Form eines Ventilators erzeugt einen Luftdruck in zwei Luftrohren 42 und 43. Das Luftrohr 42 erstreckt sich zwischen der Luftpumpe 40 und dem pneumatischen Verzweiger 44. Das Luftrohr 43 erstreckt sich zwischen der Luftpumpe 40 und dem pneumatischen Verzweiger 45. Beide pneumatischen Verzweiger 44 und 45 umfassen ein zylindrisches Rohr, das sich entlang des Rahmens 12 erstreckt. Beide pneumatischen Verzweiger 44 und 45 umfassen zwei Abschnitte, die durch eine Steckkopplung 46 (in Form einer so genannten Flapper-Kopplung) miteinander gekoppelt sind. Die Steckkopplung 46 erlaubt, dass jeder der Verzweiger 44, 45 abgetrennt wird, wenn der Rahmen 12 des Reihenpflanzgeräts gefaltet wird, und wieder angekoppelt, wenn der Rahmen 12 in seine Arbeitskonfiguration ausgeklappt wird.

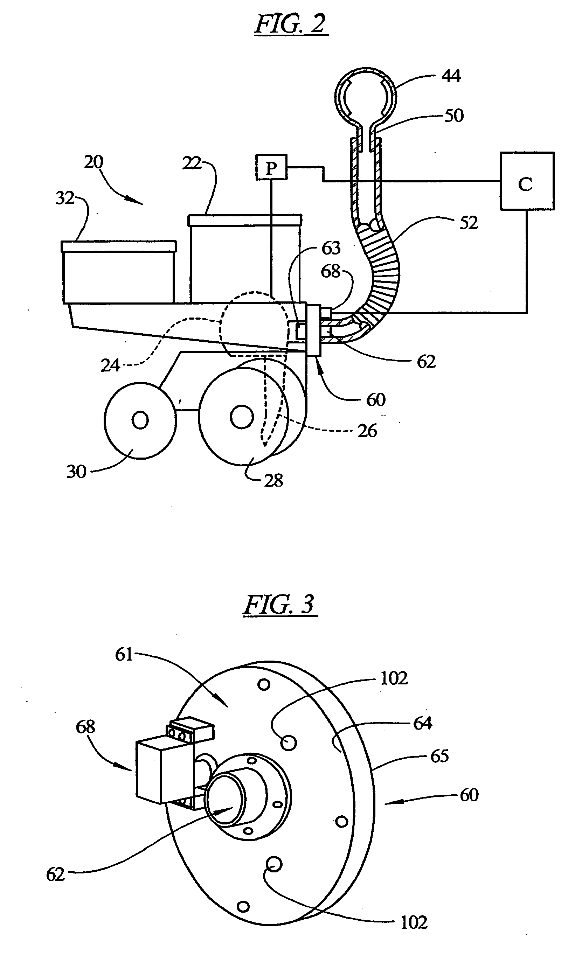

Die Figur 2 illustriert, dass jede der Reihenpflanzeinheiten 20 mit einem Saatgutbehälter 22 ausgestattet ist, der Saatgut einem Messsystem 24 zuführt, dass das Saatgut zumisst. Das zugemessene Saatgut wird durch ein Saatgutrohr 26 vom Messsystem 24 einer Pflanzfurche zugeführt, die durch einen Furchenöffner 28 im Boden hergestellt wird. Die Pflanzfurche wird durch abgewinkelte Schließräder 30 geschlossen. Die Pflanzeinheit kann auch mit einem Pestizidbehälter 32 ausgestattet sein, um während des Pflanzvorgangs anzuwendende Pestizide zu tragen.

Das Messsystem 24 ist in der dargestellten Ausführungsform ein Vakuummesssystem des gegenwärtig von der Anmelderin vertriebenen Typs. Ein derartiges Vakuummesssystem wird beispielsweise in der US 5 170 909 offenbart, deren Offenbarung durch Verweis mit in die vorliegenden Unterlagen aufgenommen wird. Negativer Luftdruck (Unterdruck) wird verwendet, um Saatgut an eine Säscheibe heranzuziehen, wenn sie einen Saatguthaufen oder -hügel durchläuft. Das Saatgut bleibt im Kontakt mit der Säscheibe, bis das Vakuum entfernt wird und das Saatgut in das Saatgutrohr 26 fällt. Die Säscheibe dient als luftdruckunterstütztes Ausgabeelement des Messsystems 24.

Die vorliegende Erfindung könnte auch an mit Überdruck arbeitenden Systemen verwendet werden, in denen ein positiver Luftdruck (Überdruck) verwendet wird, das Saatgut zu einer Säscheibe zu bewegen, wenn sie durch einen Saatguthügel dreht. Das Entfernen des positiven Luftdrucks gibt das Saatgut von der Säscheibe frei und das freigegebene Saatgut fällt dann in das Saatgutrohr 26. Jeder der pneumatischen Verzweiger 44 und 45 ist mit sich radial erstreckenden Rohrstutzen 50 ausgestattet, die mit Luftschläuchen 52 gekoppelt sind, um den Luftdruck im pneumatischen Verzeiger 44, 45 den einzelnen Messsystemen 24 zuzuführen.

Ein Drucksteuerungsventil in der Form eines Ventils 60 mit verstellbarer Öffnung ist zwischen den pneumatischen Verzweigern 44, 45 und einem Luftanschluss der Reihenpflanzeinheit 24 angeordnet. Jedes Ventil 60 umfasst ein Gehäuse 61 mit einem ersten Luftanschluss in der Form eines Rohrs 62 und einen zweiten Luftanschluss in der Form eine Rohrs 63. Das Gehäuse 61 umfasst eine Frontabdeckung 64, die an einer Rückplatte 65 befestigt ist. Das Rohr 62 ist an der Frontabdeckung 64 befestigt. Das Rohr 62 ist an der Rückplatte 65 befestigt. Innerhalb des Gehäuses 61 sind eine oder mehrere Blendenplatten wie unten beschrieben angeordnet.

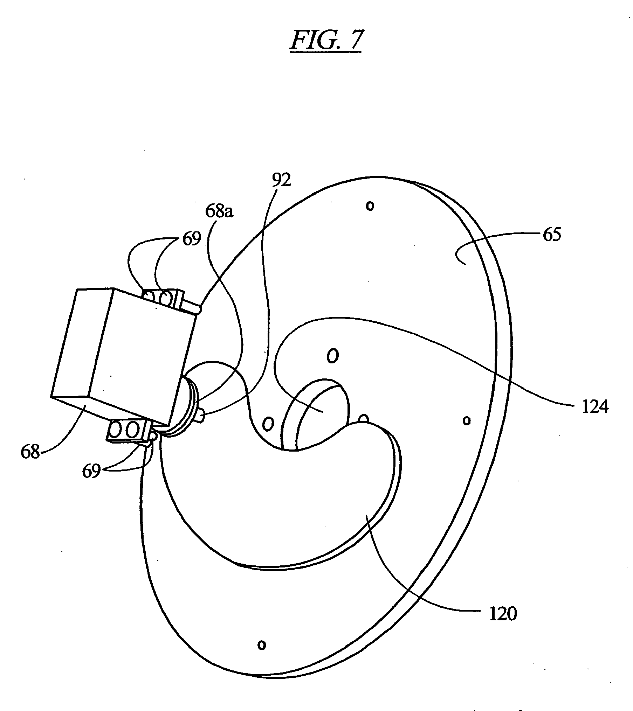

Das erste Rohr 62 ist mit dem zweiten Rohr 63 ausgerichtet. Die Blendenplatte oder -platten sind zwischen dem ersten und zweiten Rohr 62, 63 angeordnet, um eine verstellbare Verminderung des Luftflusses zwischen dem ersten Rohr 62 und dem zweiten Rohr 63 bereitzustellen. Ein Aktor 68 ist durch Befestigungselemente 69 (in Figur 7 gezeigt) an der Frontabdeckung 64 des Gehäuses 61 befestigt. Der Aktor 68 umfasst eine Ausgangswelle 68a (z. B. in Figur 7 gezeigt), die die Frontabdeckung 64 des Gehäuses 61 durchdringt und an einer der Blendenplatten angreift. Der Aktor 68 steuert in Abhängigkeit von einem an ihn angelegten Eingangssignal den Grad der von der Blendenplatte oder den Blendenplatten bedingten Verengung, indem die Blendenplatte oder Blendenplatten steuerbar gedreht werden. Der Aktor 68 ist vorzugsweise ein Servomotor, wobei der Servomotor zwecks genauer Drehung geregelt werden kann.

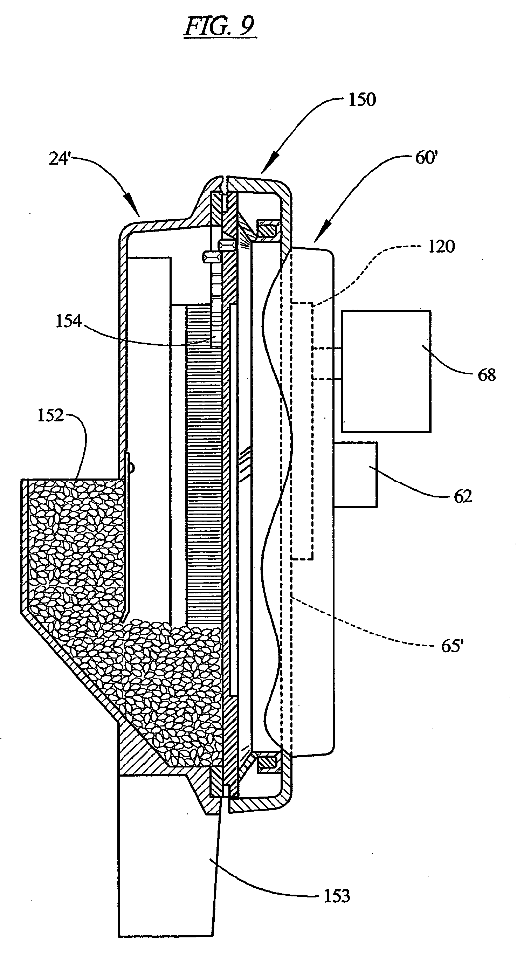

Da der Unterdruck mit der Flussrate in Beziehung steht, und die Flussrate sich mit der Änderung der Flussfläche ändern wird, wird eine Änderung der Position der Blendenplatte den Unterdruck ändern. Bei der bevorzugten Ausführungsform ist das Ventil 60 in der Nähe des Messsystems 24 oder als Teil des Messsystems 24 eingefügt (s. Figur 9). Jedoch sind andere Orte für die Ventile 60 möglich, wie entlang des Luftschlauchs 52 oder am jeweiligen Verzweiger 44, 45.

Vorzugsweise wäre ein Ventil 60 an jedem der Messsysteme 24 angeordnet. Es könnten aber auch Ventile 60 nur an den Messsystemen 24 angeordnet sein, die sich am nächsten an den Luftrohren 42, 43 befinden, um den Luftfluss dort zu beschränken, damit der Luftdruck dort besser mit dem Luftdruck an den verbleibenden Messsystemen 24 übereinstimmt, die sich weiter von den Luftrohren 42, 43 fort befinden.

Der Unterdruck kann fortdauernd durch Drucksensoren P für jede Reihe oder Gruppe von Reihen überwacht werden. Jeder Sensor kann mit einem jeweiligen Ventil 60 signalübertragend verbunden sein, um durch Rückkopplung die Position des Ventils 60 und das Niveau des Unter- oder Überdrucks am Messsystem 24 zu steuern. Alternativ kann ein Controller C, wie z. B ein Mikroprozessor, mit allen Drucksensoren P signalübertragend verbunden sein. Der Controller C kann signalübertragend mit den Aktoren 68 an den Ventilen 60 verbunden sein. Der Unter- oder Überdruck in jeder Reihe wird durch den Controller C entsprechend der Rückkopplung von den Sensoren P und durch Signalkommunikation an jeden Aktor 68 eingestellt. Wenn der Aktor 68 beispielsweise ein Servomotor ist, kann der Controller C durch ein geeignetes Ein-/Ausgabegerät den Servomotor anweisen, die Blende geringfügig durch eine begrenzte Drehung des Servomotors zu Öffnen, um den Unter- oder Überdruck am jeweiligen Messsystem 24 zu vergrößern, was eine gleiche Leistung an allen der Messsysteme sicherstellt.

Als eine alternative Rückkopplung könnte ein optischer Sensor an jedem Messsystem 24 angeordnet sein, um die Anzahl der Saatgutkörner nachzuweisen, die das Messsystem in den Boden freigibt. Typischerweise ist der optische Sensor eine im Infraroten emittierende Leuchtdiode (LED), die in Verbindung mit einer Photozelle verwendet wird. Die Photozelle (z. B. Fotodiode oder -transistor) emittiert jedes Mal einen Impuls, wenn der Lichtpegel von der Leuchtdiode eine spezifizierte Schwelle unter- bzw. überschreitet. Diese Impulse entsprechen Saatgutkörnern. Anhand dieser Information und der Fahrgeschwindigkeit des Fahrzeugs kann die an jedem Messsystem 24 ausgebrachte Saatgutrate gemessen und der Druck in jedem Messsystem 24 durch das Ventil 60 entsprechend eingestellt werden.

Obwohl Ventile 60 mit verstellbarer Öffnung in der oben beschriebenen Ausführungsform verwendet werden, könnten auch andere Typen von Steuerventilen anstelle der Ventile mit verstellbarer Öffnung verwendet werden, wie Schmetterlingsventile, und fallen auch unter die Erfindung.

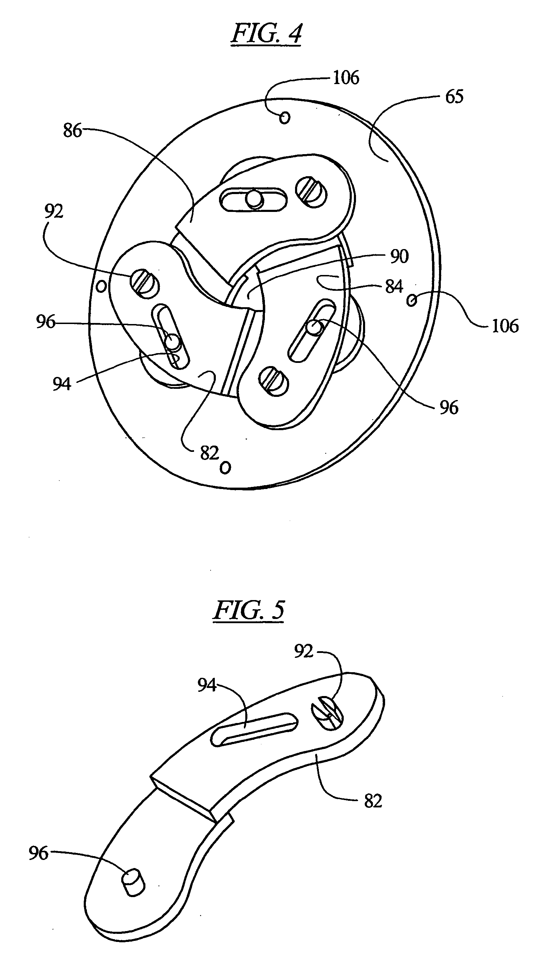

Die Figur 4 illustriert drei Blenden 82, 84, 86, die ineinander greifen, um eine irisförmige Öffnung 90 in ihrem Zentrum zu bilden. Jede Blende umfasst einen geschlitzten Drehzapfen 92, einen Nockenschlitz 94 und einen Stift 96. Jeder Stift 96 ist so angeordnet, dass er innerhalb eines Nockenschlitzes 94 einer benachbarten Blende zu positionieren ist. Zwei der geschlitzten Drehzapfen 92 sind in einer Öffnung 102 in der Frontabdeckung 64 drehbar aufgenommen. Mit einem der Drehzapfen 92 steht die Welle 68a des Aktors 68 im Eingriff (wie in Figur 7 gezeigt), so dass der Drehzapfen 92 durch den Aktor 68 gedreht werden kann. Eine fremdkraftbewirkte Drehung des Drehzapfens 92 bedingt entsprechende wechselseitige Drehungen aller der Blenden über die Stifte 96 und die Nockenschlitze 94, um die irisförmige Öffnung 90 entweder zu verkleinern oder zu vergrößern. Daher wird eine Drehung der Aktorenwelle 68a, die mit einem der Drehzapfen 92 im Eingriff steht, die Öffnung 90 verengen, wenn sie in eine erste Richtung gedreht wird, und die Öffnung 90 erweitern, wenn sie in eine zweite, entgegengesetzte Richtung gedreht wird. Die Rückplatte 65 weist weiterhin mit Gewinden versehene Öffnungen 106 zur Aufnahme von Befestigungselementen der Frontabdeckung 64 auf, um die Rückplatte 65 an der Frontabdeckung 64 zu befestigen und das davon umschlossene Gehäuse 61 zu bilden.

Die Figur 5 stellt eine einzelne Blende dar, z. B. die Blende 82. Die Blende 82 ist in zwei Ebenen versetzt, die den Zusammenbau der drei Blenden 82, 84, 96 mit einem relativ flachen Profil erlauben.

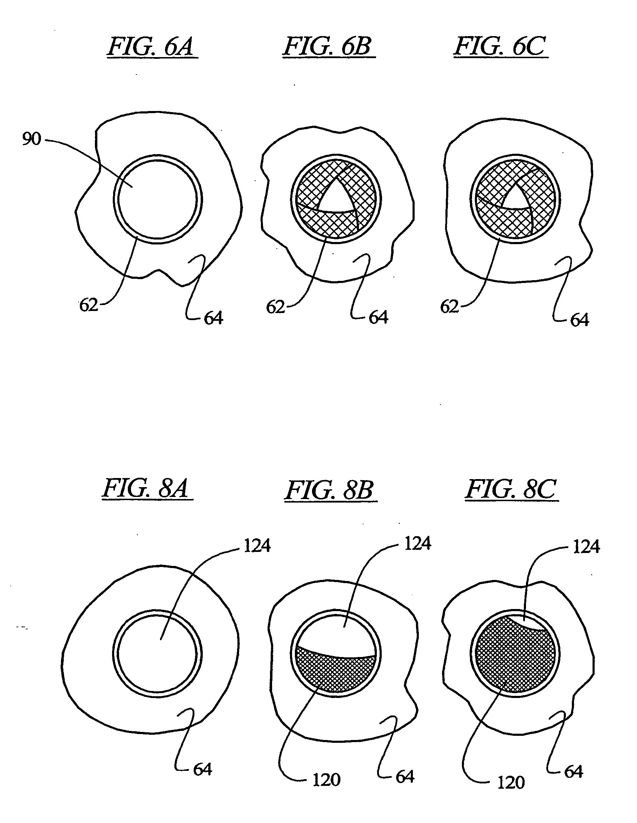

Wie in den Figuren 6a-6c gezeigt, kann eine Blendenanordnung des Iristyps verwendet werden, um die offene Fläche 90 der Blende zu steuern und den Fluss zwischen dem ersten Rohr 62 und dem zweiten Rohr 63 zu kontrollieren. In der Figur 6a ist die Öffnung 90 komplett offen, was den vollen Fluss zwischen den Rohren 62, 63 erlaubt. In Figur 6b ist die Öffnung 90 um einen gewissen Betrag geschlossen, um eine bestimmte Einschränkung des Flusses durch die Rohre 62, 63 bereitzustellen. In der Figur 6c ist die Öffnung 90 weiter geschlossen, um eine weiter vergrößerte Einschränkung des Flusses zwischen den Rohren 62, 63 bereitzustellen.

Die Figur 7 stellt eine zweite Ausführungsform dar, in der die drei Blenden 82, 84, 86 der ersten Ausführungsform durch eine einzige Blende 120 ersetzt sind. Die einzige Blende 120 umfasst einen Drehzapfen 92, wie zuvor beschrieben. Die Blende 120 ist im Wesentlichen flach und kurvenförmig. Die einzige Blende 120 wird durch die Welle 68a des Aktors 68 in derselben Weise wie in der ersten Ausführungsform unter Steuerung des Controllers C, wie er in Figur 2 dargestellt ist, gedreht. Bei dieser Ausführungsform wird eine Öffnung 124 der Blende geöffnet und geschlossen, um im Vergleich mit dem Durchlass zwischen den Rohren 62, 63 eine exzentrische Öffnung zu schaffen.

Wie in den Figuren 8a-8c dargestellt ist, in denen die einzige Blende 120 verwendet wird, wird bei einer Drehung der Blende 120 die freie Öffnung 124 zwischen den Rohren 62, 63 fortschreitend eingeschränkt. In der Figur 8a gibt die Blende 120 den Durchlass zwischen den Rohren 62, 63 komplett frei und öffnet ihn, so dass man einen fast vernachlässigbaren Widerstand erhält. In der Figur 8b wird durch die Position der Blende 120 ein etwas größerer Widerstand bereitgestellt. In der Figur 8c wird durch eine weiter eingeschränkte Öffnung 124 ein weiterer Widerstand für den Fluss bereitgestellt, die durch eine weitere Drehung der Blende 120 bewirkt wird.

Die Figur 9 stellt eine alternative Ausführungsform dar, in der das Gehäuse 61' des Ventils mit dem Messsystem 24' kombiniert ist und ein Gehäuse 150 bildet. Das Messsystem 24' kann wie in der US 5 170 909 A, deren Offenbarung durch Verweis mit hier aufgenommen wird, beschrieben ist ausgeführt sein. Eine pneumatisch unterstützte Saatgutverteilereinrichtung, wie eine Saatgutscheibe 154, verteilt Saatgut 152. Die Saatgutscheibe 154 und die Blende 120 teilen sich das gemeinsame Gehäuse 150. Das erste Rohr 62 zum Ansaugen wird verwendet, jedoch ist das zweite Rohr 63 nicht erforderlich. Die einzelne Blende 120 ist als Beispiel gezeigt und an eine Zwischenplatte 65' montiert. Die Blendenanordnung der Figur 4 des Iristyps oder ein anderer Typ eines Steuerventils könnte auch im Gehäuse der Figur 9 verwendet werden.

## Patentansprüche

1. Sämaschine (10) zum Aussäen von Saatgut auf einem Feld, mit einer Mehrzahl von Messsystemen (24), einer Luftpumpe (40) zur Erzeugung von Luftdruck, die mit einem Verzweiger (44, 45) in pneumatischer Verbindung steht und einer pneumatischen Verbindung zwischen dem Verzweiger (44, 45) und wenigstens einem der Messsysteme (24), **gekennzeichnet durch** ein Ventil (60), das pneumatisch zwischen dem Verzweiger (44, 45) und einem luftdruckunterstützten Ausgabeelement innerhalb wenigstens eines der Messsysteme (24) angeordnet ist, wobei eine Öffnung (90, 124) des Ventils (60) insbesondere **durch** einen Aktor (68) verstellbar ist, derart, dass das Ventil (60) ein Gehäuse (61) aufweist, an dem der Aktor (68) befestigt ist, sowie mindestens eine vom Gehäuse (61) gehaltene Blende (82, 84, 86, 120) umfasst, die zumindest teilweise eine verstellbare Öffnung (90, 124) definiert, wobei die Blende (82, 84, 86, 120) **durch** den Aktor (68) bewegbar ist, um eine offene Durchflussfläche der Öffnung (90, 124) zu ändern.

2. Sämaschine (10) nach Anspruch 1, **dadurch gekennzeichnet, dass** das Ventil (60) zwischen dem Verzweiger (44, 45) und allen Messsystemen (24) oder zumindest dem Messsystem (24) angeordnet ist, das sich pneumatisch der Luftpumpe (40) am nächsten befindet.

3. Sämaschine (10) nach Anspruch 1 oder 2, **dadurch gekennzeichnet, dass** die Luftpumpe (40) einen Über- oder Unterdruck erzeugt.

4. Sämaschine (10) nach einem der Ansprüche 1 bis 3, **dadurch gekennzeichnet, dass** das Ventil (60) pneumatisch zwischen dem Messsystem (24) und der pneumatischen Verbindung zwischen dem Verzweiger (44, 45) und dem Messsystem (24), insbesondere einem Luftschlauch (52), angeordnet ist.

5. Sämaschine (10) nach einem der Ansprüche 1 bis 4, **dadurch gekennzeichnet, dass** das Ventil (60) ein Schmetterlingsventil ist.

6. Sämaschine (10) nach einem der Ansprüche 1 bis 5, **dadurch gekennzeichnet, dass** der Aktor (68) eine drehbare Ausgangswelle (68a) aufweist, mit der eine Blende (82, 84, 86, 120), die zumindest teilweise eine verstellbare Öffnung (90, 124) definiert, drehbar ist.

7. Sämaschine (10) nach Anspruch 6, **dadurch gekennzeichnet, dass** das Ventil (60) drei miteinander gekoppelte Blenden (82, 84, 86) umfasst, die zusammen eine durch den Aktor (68) verstellbare Irisblende definieren.

8. Sämaschine (10) nach Anspruch 6, **dadurch gekennzeichnet, dass** das Ventil (60) eine Blende (120) umfasst, die durch den Aktor (68) über eine Öffnung (124) verbringbar ist.

9. Sämaschine (10) nach einem der Ansprüche 1 bis 8, **dadurch gekennzeichnet, dass** das Gehäuse (61) einen ersten Luftanschluss und einen zweiten Luftanschluss aufweist, die in Flussverbindung stehen, wobei die Blende (82, 84, 86, 120) zwischen dem ersten und dem zweiten Luftanschluss angeordnet ist.

10. Sämaschine (10) nach einem der Ansprüche 1 bis 9, **dadurch gekennzeichnet, dass** das Gehäuse (61) in das Gehäuse des Messsystems (24') integriert ist.

11. Sämaschine (10) nach einem der Ansprüche 1 bis 10, **dadurch gekennzeichnet, dass** das Messsystem (24) ein Teil einer Reihenpflanzeinheit (20) mit einem Furchenöffner (28) und einem Saatgutbehälter (22) ist.

12. Sämaschine (10) nach einem der Ansprüche 1 bis 11, **dadurch gekennzeichnet, dass** das Ventil (60) mit einer Steuerung (C) verbunden ist, die eingerichtet ist, ein vorbestimmtes Druckniveau im Messsystem (24) aufrecht zu erhalten.

13. Sämaschine (10) nach Anspruch 12, **dadurch gekennzeichnet, dass** die Steuerung (C) mit einem Sensor (P) verbunden ist, der den Luftdruck und/oder den Durchsatz des Saatguts im Messsystem (24) erfasst.

14. Ventil (60) zur Verwendung in einer Sämaschine (10) nach einem der vorhergehenden Ansprüche, **dadurch gekennzeichnet, dass** das Ventil (60) eine verstellbare Öffnung (90, 124) aufweist, sowie ein Gehäuse (61), an dem ein Aktor (68) befestigt ist, sowie mindestens eine vom Gehäuse (61) gehaltene Blende (82, 84, 86, 120) umfasst, die zumindest teilweise die verstellbare Öffnung (90, 124) definiert, wobei die Blende (82, 84, 86, 120) durch den Aktor (68) bewegbar ist, um eine offene Durchflußfläche der Öffnung (90, 124) zu ändern.

## Claims

1. Sowing machine (10) for sowing seeds in a field, with a plurality of measuring systems (24), an air pump (40) for generating air pressure, the air pump being pneumatically connected to a manifold (44, 45), and with a pneumatic connection between the manifold (44, 45) and at least one of the measuring systems (24), **characterized by** a valve (60) which is arranged pneumatically between the manifold (44, 45) and an air-pressure-assisted discharge element within at least one of the measuring systems (24), with an opening (90, 124) of the valve (10) being adjustable, in particular by means of an actuator (68), in such a manner that the valve (60) has a housing (61), to which the actuator (68) is fastened, and comprises at least one diaphragm (82, 84, 86, 120) which is held by the housing (61) and at least partially defines an adjustable opening (90, 124), and with the diaphragm (82, 84, 86, 120) being movable by the actuator (68) in order to change an open flow-through area of the opening (90, 124).

2. Sowing machine (10) according to Claim 1, **characterized in that** the valve (60) is arranged between the manifold (44, 45) and all of the measuring systems (24) or at least the measuring system (24) which is located closest pneumatically to the air pump (40).

3. Sowing machine (10) according to Claim 1 or 2, **characterized in that** the air pump (40) generates a positive or negative pressure.

4. Sowing machine (10) according to one of Claims 1 to 3, **characterized in that** the valve (60) is arranged pneumatically between the measuring system (24) and the pneumatic connection between the manifold (44, 45) and the measuring system (24), in particular an air hose (52).

5. Sowing machine (10) according to one of Claims 1 to 4, **characterized in that** the valve (60) is a butterfly valve.

6. Sowing machine (10) according to one of Claims 1 to 5, **characterized in that** the actuator (68) has a rotatable output shaft (68a) with which a diaphragm (82, 84, 86, 120), which at least partially defines an adjustable opening (90, 124), can be rotated.

7. Sowing machine (10) according to Claim 6, **characterized in that** the valve (60) comprises three diaphragms (82, 84, 86) which are coupled to one another and together define an iris diaphragm which can be adjusted by the actuator (68).

8. Sowing machine (10) according to Claim 6, **characterized in that** the valve (60) comprises a diaphragm (120) which can be brought over an opening (124) by the actuator (68).

9. Sowing machine (10) according to one of Claims 1 to 8, **characterized in that** the housing (61) has a first air connection and a second air connection which are connected in terms of flow, with the diaphragm (82, 84, 86, 120) being arranged between the first air connection and the second air connection.

10. Sowing machine according to one of Claims 1 to 9, **characterized in that** the housing (61) is integrated into the housing of the measuring system (24').

11. Sowing machine (10) according to one of Claims 1 to 10, **characterized in that** the measuring system (24) is part of a row-planting unit (20) with a furrow opener (28) and a seed container (22).

12. Sowing machine (10) according to one of Claims 1 to 11, **characterized in that** the valve (60) is connected to a controller (C) which is set up to maintain a predetermined pressure level in the measuring system (24).

13. Sowing machine (10) according to Claim 12, **characterized in that** the controller (C) is connected to a sensor (P) which detects the air pressure and/or the seed throughput in the measuring system (24).

14. Valve (60) for use in a sowing machine (10) as claimed in one of the preceding claims, **characterized in that** the valve (60) has an adjustable opening (90, 124) and a housing (61), to which an actuator (68) is fastened, and comprises at least one diaphragm (82, 84, 86, 120) which is held by the housing (61) and at least partially defines the adjustable opening (90, 124), with the diaphragm (82, 84, 86, 120) being movable by the actuator (68) in order to change an open flow-through area of the opening (90, 124).

## Revendications

1. Semoir (10) pour semer des semences dans un champ, comprenant une pluralité de systèmes de mesure (24), une pompe à air (40) pour produire de l'air comprimé, qui est en liaison pneumatique avec un distributeur (44, 45), et une liaison pneumatique entre le distributeur (44, 45) et au moins l'un des systèmes de mesure (24), **caractérisé par** une soupape (60), qui est disposée pneumatiquement entre le distributeur (44, 45) et un élément de diffusion assisté par la pression d'air à l'intérieur d'au moins l'un des systèmes de mesure (24), une ouverture (90, 124) de la soupape (60) pouvant être réglée en particulier par un actionneur (68), de telle sorte que la soupape (60) présente un boîtier (61) auquel est fixé l'actionneur (68), et comprend aussi au moins un diaphragme (82, 84, 86, 120) maintenu par le boîtier (61), qui définit au moins en particulier une ouverture réglable (90, 124), le diaphragme (82, 84, 86, 120) pouvant être déplacé par l'actionneur (68) afin de modifier une surface de passage de l'ouverture (90, 124).

2. Semoir (10) selon la revendication 1, **caractérisé en ce que** la soupape (60) est disposée entre le distributeur (44, 45) et tous les systèmes de mesure (24) ou au moins le système de mesure (24) qui se trouve pneumatiquement le plus près de la pompe à air (40).

3. Semoir (10) selon la revendication 1 ou 2, **caractérisé en ce que** la pompe à air (40) produit une surpression ou une dépression.

4. Semoir (10) selon l'une quelconque des revendications 1 à 3, **caractérisé en ce que** la soupape (60) est disposée pneumatiquement entre le système de mesure (24) et la liaison pneumatique entre le distributeur (44, 45) et le système de mesure (24), en particulier un flexible d'air (52).

5. Semoir (10) selon l'une quelconque des revendications 1 à 4, **caractérisé en ce que** la soupape (60) est une soupape papillon.

6. Semoir (10) selon l'une quelconque des revendications 1 à 5, **caractérisé en ce que** l'actionneur (68) présente un arbre de sortie rotatif (68a) avec lequel peut tourner un diaphragme (82, 84, 86, 120), qui définit au moins en partie une ouverture réglable (90, 124).

7. Semoir (10) selon la revendication 6, **caractérisé en ce que** la soupape (60) comprend trois diaphragmes (82, 84, 86) accouplés les uns aux autres, qui définissent ensemble un diaphragme à iris réglable par l'actionneur (68).

8. Semoir (10) selon la revendication 6, **caractérisé en ce que** la soupape (60) comprend un diaphragme (120) qui peut être amené par l'actionneur (68) par-dessus une ouverture (124).

9. Semoir (10) selon l'une quelconque des revendications 1 à 8, **caractérisé en ce que** le boîtier (61) présente un premier raccord d'air et un deuxième raccord d'air, qui sont en liaison fluidique, le diaphragme (82, 84, 86, 120) étant disposé entre le premier raccord d'air et le deuxième raccord d'air.

10. Semoir (10) selon l'une quelconque des revendications 1 à 9, **caractérisé en ce que** le boîtier (61) est intégré dans le boîtier du système de mesure (24').

11. Semoir (10) selon l'une quelconque des revendications 1 à 10, **caractérisé en ce que** le système de mesure (24) fait partie d'une unité de plantage en rangs (20) avec un dispositif d'ouverture de sillons (28) et un récipient pour les semences (22).

12. Semoir (10) selon l'une quelconque des revendications 1 à 11, **caractérisé en ce que** la soupape (60) est connectée à une commande (C) qui est prévue pour maintenir un niveau de pression prédéterminé dans le système de mesure (24).

13. Semoir (10) selon la revendication 12, **caractérisé en ce que** la commande (C) est connectée à un capteur (P) qui détecte la pression d'air et/ou le débit des semences dans le système de mesure (24).

14. Soupape (60) pour l'utilisation dans un semoir (10) selon l'une quelconque des revendications précédentes, **caractérisée en ce que** la soupape (60) présente une ouverture réglable (90, 124) ainsi qu'un boîtier (61) sur lequel est fixé un actionneur (68), et comprend aussi au moins un diaphragme (82, 84, 86, 120) maintenu par le boîtier (61), qui définit au moins en partie l'ouverture réglable (90, 124), le diaphragme (82, 84, 86, 120) pouvant être déplacé par l'actionneur (68) afin de modifier une surface de passage de l'ouverture (90, 124).
